# EUROPEAN PATENT SPECIFICATION

(11) **EP 0 539 355 B1**
(45) Date of publication and mention of the grant of the patent: **11.01.1995**
(21) Application number: 89909933.7
(22) Date of filing: 20.07.1989
(51) Int. Cl.: G01J 5/52

(54) **FLICKER-FREE INFRARED SIMULATOR WITH RESISTOR BRIDGES**
FLICKERFREIER INFRAROT-SIMULATOR MIT WIDERSTANDSBRÜCKEN
SIMULATEUR D'INFRAROUGE SANS PAPILLOTEMENT AVEC PONTS A RESISTANCES

(30) Priority: 04.08.1988 US 228630
(43) Date of publication of application: 05.05.1993
(73) Proprietor: Hughes Aircraft Company, Los Angeles, California 90045-0066 (US)
(72) Inventor: GRINBERG, Jan, Los Angeles, CA 90049 (US); WELKOWSKY, Murray, S., Chatsworth, CA 91311 (US)
(74) Representative: Witte, Alexander, Dr.-Ing.
(86) International application number: US8903151
(87) International publication number: WO9001686

(56) References cited:
- EP-A- 0 063 415
- US-A- 3 684 859
- US-A- 3 694 624
- US-A- 4 184 066
- US-A- 4 239 312
- US-A- 4 378 489
- US-A- 4 644 141
- US-A- 4 724 356

## Description

The present invention relates to an infrared (IR) radiating element, comprising:
a substrate formed from an insulative material,
a resistor element spanning a portion of said substrate and contacting the substrate at spaced-apart contact locations, a thermally insulative gap being associated with said resistor element, and
a semiconductive drive circuit for directing a current through said resistor element to heat the resistor element and thereby produce IR radiation therefrom.

The invention is further concerned with an infrared simulator comprising an array of pixel cells, each said pixel cell being an infrared radiating element as mentioned above.

Such resistor-based IR simulators are disclosed in US patent 4,724,356.

In general, this invention relates to systems for simulating an infrared image for use in testing infrared seekers.

It would be highly desirable to be able to simulate a real-time infrared (IR - roughly 0.7-20 microns wavelength) image that is substantially free of flicker. This would provide an effective way to test IR detectors, also referred to as "seekers" and "focal plane arrays". At present, problems of excessive flicker impose a serious constraint on IR simulation systems. A basic problem with image flicker is that it creates a false target indication, since flicker corresponds to a change in the temperature of the IR image. Unlike the human eye which integrates light flicker over a period of about 30-50 msec., IR detectors integrate flickers over periods of only about 1-5 msec. Thus, there is a significant range over which flicker (in the visible spectrum) would not be detected by the human eye but would be picked up by an IR detector if it is within the IR spectrum.

Excessive flicker has been avoided heretofore with the use of a Bly cell to project a static image that has been applied to the cell. Bly cells are described in Vincent T. Bly, "Passive Visible to Infrared Transducer for Dynamic Infrared Image Simulation", Optical Engineering, Nov./Dec. 1982, Vol. 21, No. 6, pp. 1079-1082. However, the requirement that this type of system be operated with a static image is a significant limitation, since a more meaningful test of IR detectors calls for the detection of images that can change in real-time.

A prior attempt to produce an IR simulation system with a real-time image involved the formation of a video image by a cathode ray tube (CRT). The CRT video image was applied as an input to a liquid crystal light valve (LCLV), to which an IR readout beam was applied. The LCLV modulated the IR readout beam with the video image from the CRT to produce a corresponding IR video image. See S.T. Wu et al, "Infrared Liquid Crystal Light Valve", Proceedings of the SPIE, Vol. 572, pages 94-101, August, 1985.

This approach unfortunately was found to result in a substantial amount of flicker. The problem is that the illuminated pixels on the CRT screen decay in intensity over time prior to the next electron beam scan. This causes an undesirable intensity gradient to appear on a projected IR image from an IR-LCLV which is coupled to the CRT, and an IR detector will then detect a non-uniform image. Because the detector is generally looking for intensity gradients, or edges, by which its associated algorithms determine the presence of "targets", such intensity gradients are misleading. While this problem could theoretically be solved by synchronizing the IR detector scan with the CRT electron beam scan, such synchronization may not be desired in many applications. Thus, although an IR-LCLV has the capability of projecting high resolution, high dynamic range, real-time simulated IR images when compared to a Bly cell, this advantage is mitigated by the CRT pixel decay. Furthermore, electrically driven matrix emitter devices have flicker if driven with simple RC-type pixel addressing circuits, since the RC decay is similar in effect to the phosphor decay of the CRT.

Modifications of the basic CRT-LCLV system described above might be envisioned to reduce or eliminate flicker, but they introduce other problems. In one such modification, two storage CRTs are provided with shutters in front of each screen. Operation is alternated between the two CRTs by means of the shutters, so that they are alternately applied to the LCLV. By staggering the video data frames between the two CRTs, the phosphor decay seen by the LCLV could theoretically be reduced significantly. However, in such a system, it may be difficult to implement the very fast shutter coordination that would be necessary to substantially avoid flicker. Furthermore, storage CRTs are non-uniform, resulting in image differences and consequent flicker.

Another approach would be to use a single CRT, but to increase the frame rate of the Raster scan from the conventional rate of about 30 Hz to a much higher rate, perhaps about 1,000 Hz. The CRTs of the future may provide higher bandwidths than that presently attainable, thereby making this approach more attractive.

A possible approach which does not provide real-time addressable images is the use of a "flicker-free" film or slide projector like the SCANAGON® device produced by Robert Woltz Associates, Inc. of Newport Beach, California and disclosed in Patent Nos. 4,113,367 and 4,126,386, or a comparable image projector. While the potential may exist for this limited technique, it has not been demonstrated to provide jitter-free and flicker-free images. Furthermore, this method will not provide real-time electronically updatable imagery.

In addition to flicker-free images, it is very important for an IR simulation system to achieve high spatial resolution, large dynamic temperature ranges and fast response. Spatial resolutions should be at least 500x500 pixels, with flicker less than 1%. For some applications frame rates should be 100 Hz or greater, and the dynamic thermal range should ideally be from near room temperature (some applications require cooled background temperatures) to 1,000°C, particularly in the 3-5 micron spectral range. This combination of dynamic range and response time requirements is difficult for commercially available liquid crystals to achieve. Furthermore, most IR simulation applications require the simulator to be mounted on the two-axis target arm of a Carco table, which is then moved relative to the IR seeker being tested. For this purpose weight and size limitations are very important. The liquid crystal based IR simulator requires a large black-body source, typically in excess of 100 pounds, and an expensive wire grid polarizer to be mounted with the active matrix. This reduces the mobility of the supporting Carco table arm.

Liquid crystal systems are also limited in dynamic range because it is difficult to photogenerate enough charge in the silicon substrate, while maintaining spatial resolution, to rotate the liquid crystal molecules completely. Furthermore, there is a restriction on the speed of response of liquid crystals if a reasonable thermal dynamic range is to be maintained. The flicker problem associated with liquid crystal systems can be reduced by utilizing a flicker-free visible addressing source for the liquid crystal light valve. However, known sources of this type are limited in speed, resolution, weight and size.

Patent No. 4,724,356 to Daehler discloses a resistor-based IR simulator in which an array of resistors are individually addressed to stimulate IR emission. The Daehler approach is also discussed in Daehler, "Infrared Display Array", SPIE Vol. 765, Imaging Sensors and Displays (1987), pages 94-101 and Burriesci et al., "A Dynamic RAM Imaging Display Technology Utilizing Silicon Black-body Emitters", SPIE Vol. 765, Imaging Sensors and Displays (1987), pages 112-122. Both the resistors and their respective drive transistor circuits are formed from a bulk silicon wafer. An air gap groove is formed under the resistors to help reduce thermal conduction losses to the underlying bulk silicon wafer. To facilitate the selective etching used to form the insulating air gap grooves, the top layer of the wafer is heavily doped. However, this doping makes the top layer electrically conductive, resulting in a significant impedance mismatch between the resistors and their respective transistor drive circuits. As a result, most of the input power is lost in the drive circuitry, rather than going into IR radiation. This reduction in the power transfer to the resistors results in a need for even more input power to the transistors, leading to a potential overheating problem.

In addition to an inefficient use of input power, in the Daehler approach only a relatively small portion of the pixel area (less than 10%) is actually occupied by the radiating resistor. Much of the area that might otherwise be devoted to the resistor is occupied by the drive transistors and the insulating air gap. As a result, to achieve a given apparent temperature for the pixel as a whole the resistor itself must be heated to a significantly higher temperature. This substantially reduces the system's effective thermal dynamic range.

Another problem with the Daehler approach relates to the electrical lead lines used to address the individual pixels. Relatively large silicon wafers must be used with present technology to achieve a significant number of pixels. For example, a wafer of about four inches is required for a 512x512 array. This means that the electrical lead lines on the chip must also be about four inches long. This in turn leads to two significant problems. First, there is a large amount of capacitive coupling associated with the long lead lines. Parasitic capacitance between conductive substrate and metal lead lines can limit the response time. Second, defects such as pin holes can appear in the oxide insulator formed on the substrate, causing a short circuit between the line and the silicon substrate which renders the associated pixel or pixels inoperative. The longer the lines, the greater is the probability of such defects. Daehler tries to resolve this problem by limiting the size of the array to 8x128 pixels, and coupling many such arrays together side-by-side to produce an aggregate array of reasonable size. However, the coupling process itself introduces significant complexities.

Further, US patent 4,378,489 discloses an IR radiating element, comprising a substrate formed from an insulative material, a resistor on said substrate and means for directing a current through said resistor to heat the resistor and thereby produce IR radiation therefrom.

As it is the case in the Daehler approach, here also only a relatively small portion of the pixel area is actually occupied by the radiating resistor. Further, there are no provisions for reducing thermal conduction losses to the underlying substrate.

In view of the above problems, the goal of the present invention is to provide an infrared radiating element and an IR simulation system using such element which is substantially flicker-free, light in weight, has a large thermal dynamic range and fast response. Further, the IR radiating element should be power efficient, devote most of the pixel area to the radiating element, and avoid the capacitive coupling and insulator defect problems associated with long lead lines on a single crystal semiconductor substrate.

With respect to the infrared radiating element mentioned at the outset this object is achieved, in that said resistor element is formed as a resistor bridge, said resistor bridge being shaped to form said thermally insulative gap between the resistor bridge and substrate between said contact locations, and that said drive circuit is located on said substrate.

According to the IR simulator mentioned at the outset this object is achieved in that each pixel cell is such a new infrared radiating element, each semiconductor drive circuit enabling a desired amount of current flow through the respective resistor bridge in response to an input control signal, control, actuating and power lead lines being provided for respectively delivering control and actuating signals to said drive circuit, and an electrical power signal to said resistor bridge.

Thus, in accordance with the invention the above-mentioned goal is achieved by providing an IR pixel matrix in the form of an array of resistor bridges formed on an insulating substrate, such as sapphire. The resistor bridges span a portion of each pixel cell, contact the substrate and spaced-apart contact locations, and are shaped to form a thermally insulative gap between the bridge and substrate. A semiconductor drive circuit on the substrate enables a desired amount of current flow through the bridge in response to an input control signal to heat the bridge, thereby producing a desired amount of IR radiation. Control, actuating and power lead lines extend along the substrate to deliver control and actuating signals to the drive circuits, and an electrical power signal to the resistor bridges; since the substrate is insulative, capacitive coupling and shorting problems are mitigated even with long lead lines.

In the preferred embodiment the drive circuits are located on the substrate surface under the resistor bridges, and at least some of the lead lines also extend under the bridges. Each pixel cell includes a thermally reflective element between the resistor bridge and drive circuit to reflect IR radiation away from the drive circuit. The thermally reflective element may comprise either a second bridge formed from a thermally reflective material which bridges the drive circuit and is spaced from both that circuit and the resistor bridge, or a thermally reflective layer which overlies an insulative layer on the drive circuit.

To reduce flicker to less than 1%, the drive circuit for each pixel comprises a sample and hold circuit in which a first transistor applies a control signal to a holding capacitor, and a second transistor applies a power signal to the resistor bridge in response to the capacitor signal. The electrical impedance of the resistor bridge preferably matches that of the drive circuit.

The resistor bridges may be implemented in various ways. In one implementation they comprise a base bridge formed from an insulative material, with a resistive layer over the base. The resistivity and thickness of the resistive layer are selected to produce a desired resistance. The resistive layer may itself be surmounted by a coating of high thermal emissive material. The resistor bridge may also be formed from a material having an enhanced porosity which decreases its thermal conductivity. To concentrate the voltage drops towards the centers of the bridges and away from their connections with the substrate, the bridges may be tapered so that their cross-sectional areas near the center are significantly less than near their contacts with the substrate.

The resulting IR pixel array has a significantly better combination of thermal dynamic range, speed of response, resolution, weight, size, efficiency and flicker-free operation than any other known system. Additional features and advantages of the invention will be apparent to those skilled in the art from the following detailed description of preferred embodiments, taken together with the accompanying drawings, in which:
FIG. 1 is a block diagram of an IR simulator system which incorporates the present invention;
FIG. 2 is a diagrammatic plan view of a portion of the pixel cell array used to create an IR image;
FIG. 3 is a schematic diagram of the drive circuitry employed in each pixel cell;
FIGs. 4-6 are sectional views showing different embodiments of the resistor bridge which provides the IR radiating element for each pixel;
FIGs. 7-9 are sectional views illustrating various embodiments of the relationship between the resistor bridge of each pixel and the drive circuitry therefore; and
FIG. 10 is an illustrative plan view showing the disposition of electrical lead lines with respect to the resistor bridge for one embodiment.

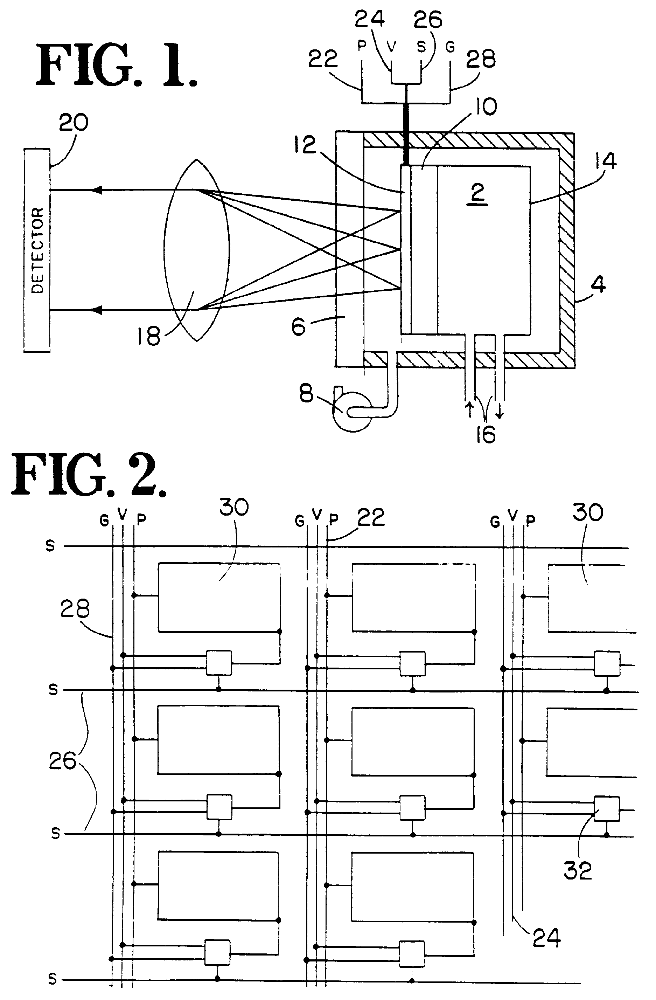

FIG. 1 shows the basic elements of an IR simulation system constructed in accordance with the invention. An IR radiating mechanism 2 is placed within a vacuum chamber 4 which has an IR window 6 at its forward end. A vacuum pump 8 evacuates the chamber in a conventional manner. The IR structure includes an insulative substrate 10, preferably sapphire, a two-dimensional array 12 of IR emitting elements on the forward side of substrate 10, and a cooling mechanism 14 contacting the rear of the substrate. The cooling element is preferably a copper block cooled by water or freon flowing through inlet and outlet pipes 16. The IR window 6 is formed from a suitable material such germanium or zinc selinide, and is preferably provided with an anti-reflective coating to prevent reflection of emitted IR radiation back into the chamber.

The individual IR emitting elements within the array 12 provide controlled emissions which are directed by a lens 18 onto an IR detector 20 being tested. The emissions from each individual IR radiating element are controlled by electrical signals applied to the array. The electrical leads into the array include a power line 22 connected to a DC power source, a series of data lines 24 which carry image information signals to the various IR elements, a series of strobe lines 26 which strobe rows of IR elements in succession in coordination with the image signal, and a ground line 28. The image data input signals may represent an actual video image, a computer simulation, or other desired pattern.

The IR radiating array is divided into a matrix of pixel cells, each of which is individually controlled to emit a desired amount of IR radiation. The resolution of the IR image is governed by the number of pixels, which are typically provided in a 256x256, 512x512 or 1024x1024 array. A section of such an array is illustrated in FIG. 2. Each pixel cell includes a resistor bridge 30, which is the actual IR radiating element, and a drive circuit 32 for the resistor bridge. Each pixel cell is typically about 150 microns square, while the resistor bridges are about 120 microns square. The drive circuits employ two transistors, each of which is typically about 50 microns square. The aluminum electrical lead lines are typically about 25 microns wide.

FIG. 2 is a simplified drawing which illustrates the functional relationship between the various elements in the array, but does not show them in their preferred physical arrangement; this will be discussed further below. One end of each resistor bridge 30 is connected to a DC power line 22, while the other end is connected to its associated drive circuit 32. Each drive circuit acts in response to an applied image signal from line 24 to control the flow of current from the power line, through the resistor bridge and drive circuit to ground.

The pixel cells are arranged in a matrix of rows and columns. Electrical inputs are provided in a manner that allows each pixel to be separately programmed, yet avoids the need for separate lead lines for each pixel. Discrete signals are applied to the line 24 for each column, so that each drive circuit in a given column receives the same signal, but the signals vary from column-to-column. Each row of pixel cells is strobed in succession via strobe lines 26, which are connected to the pixel drive circuits. The application of a strobe signal enables the operation of a drive circuit, which otherwise holds off the flow of any current through the resistor bridge. By varying the pattern of image data signals in synchronism with the progression of the strobe signal from row-to-row, a unique signal can be applied to each pixel cell to establish the resistor current through that cell at a unique value. The drive circuits are designed so that they can acquire an image data signal only during the brief period when the circuit is being strobed, so that the changing pattern of signals while other rows are being strobed has no effect upon the signal acquired by a particular pixel. Each drive circuit includes a sample and hold circuit which holds the acquired image data signal during the period of time required to strobe all of the other rows. With a frame rate in the order of 100 Hz, the sample and hold circuits keep the decay of the video signals acquired by their respective pixels to less than 1%. This results in a substantially flicker-free operation.

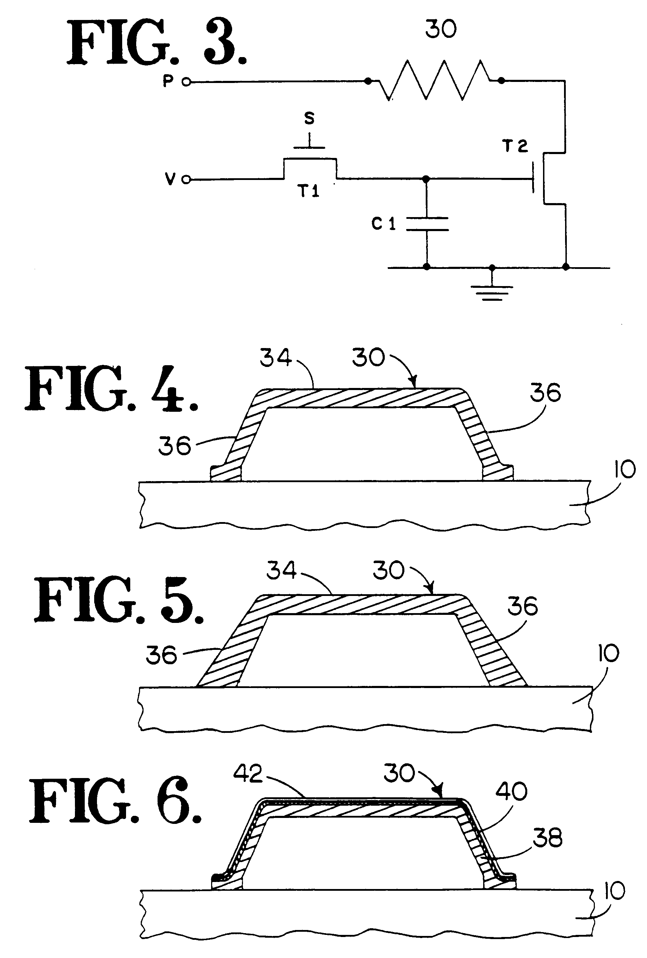

A schematic diagram of the preferred drive circuit for each pixel is given in FIG. 3. The circuit is preferably implemented with a silicon-on-sapphire (SOS) wafer in which the active circuit elements are formed from a silicon layer on the sapphire substrate 10. SOS wafers are currently available in 5 inch diameters, and larger wafers will probably be produced in the future. Since an insulating substrate is employed, the prior problem of shorting and capacitive coupling from the lead lines is substantially eliminated, thereby permitting the use of large arrays.

Each sample and hold circuit includes a first FET T1 with its source-drain circuit connecting the image data input to a holding capacitor C1. The signal held by C1 is applied to the gate of a second FET T2, and controls the amount of current flow permitted by T2. The bridge resistor 30 is connected between the DC power source and the drain or source of T2, depending upon the transistor connection; the opposite source-drain terminal of T2 is connected to ground. Thus, the amount of current permitted to flow through resistor 30, and accordingly the amount of IR radiation emitted by resistor 30, is controlled by the video signal held by C1 and applied to the gate of T2.

A simple implementation of bridge resistor 30 is shown in FIG. 4. The resistor has a center.span 34 that is elevated above the surface of sapphire substrate 10 by a pair of legs 36 at opposite ends of the center span. The vertical air gap clearance between center span 34 and the substrate is preferably about 2-5 microns, which is sufficient to prevent substantial thermal conduction loss from the resistor to the substrate. The method of forming such a bridge resistor is known, and is described in Patent No. 4,239,312 to Myer et al., assigned to Hughes Aircraft Company, the assignee of the present invention. The bridge resistor could also be implemented with electrically conductive, metallic vertical legs and a planar center span of resistor material. In this configuration, because the legs have high electrical conductivity, there is a proportionate reduction in the voltage-induced thermal gradients, and reduction in stress.

Whereas the resistors employed in the Daehler IR simulator were limited to boron doped silicon because of the bulk silicon substrate, with the present invention the resistor material can be selected to optimize its characteristics. Ideally, the resistor should have a low thermal conductivity to limit heat transfer to the substrate, an electrical conductivity which matches the resistor impedance to the impedance of the drive circuit, a low coefficient of thermal expansion to prevent the resistor from expanding significantly with respect to the lower temperature substrate, and a high melting point. One suitable resistor material is polysilicon, which has a high melting temperature, controllable resistivity, small temperature dependent resistivity, and a low coefficient of thermal expansion. Other materials which may be suitable include graphite, which has good temperature properties, high emissivity, titanium oxides, tantalum oxides, silicon oxides and cermets.

To minimize thermal stress at the junction between the bridge resistor and the substrate, the bridge may be fabricated as shown in FIG. 5 so that its legs 36 are relatively thick where they contact the substrate, and progressively taper in cross-sectional area towards the center span 34. This arrangement reduces the resistance of the legs, particularly in the vicinity of the substrate, and also adds mechanical support. Accordingly, the bulk of the voltage drop and the resultant high temperature will occur at the center span 34, which is desirable to both reduce mechanical stress and enhance IR radiation. The temperature of the bridge will be lower along its legs, particularly near the substrate, since less power is dissipated there.

Further protection against heat loss may be obtained by increasing the porosity of the resistor material through electron beam deposition or other suitable technique. An increased porosity reduces the thermal conductivity of the material, making it even less susceptible.

In another embodiment, illustrated in FIG. 6, the resistor bridge is formed from a base bridge 38 of insulative material such as SiO₂, with a thin resistive layer 40 over the base bridge 38. The resistivity and thickness of the resistive layer 40 are selected to produce the desired resistance for the bridge. A very thin metal or ceramic-metal (cermet) layer, preferably on the order of about 50 Angstroms thick, would be suitable. The insulative base bridge 38 should itself be made as thin as possible, consistent with the required mechanical support, to provide fast response and low thermal conductivity. SiO₂ about 0.5-1 micron thick would be suitable. The resistive layer 40 might be coated with a layer of high thermal emissive material 42, such as carbon black or gold black, to improve the radiative efficiency of the bridge. The thermally emissive layer may then be sealed with a sealing coat of SiO₂ about 50-100 Angstroms thick.

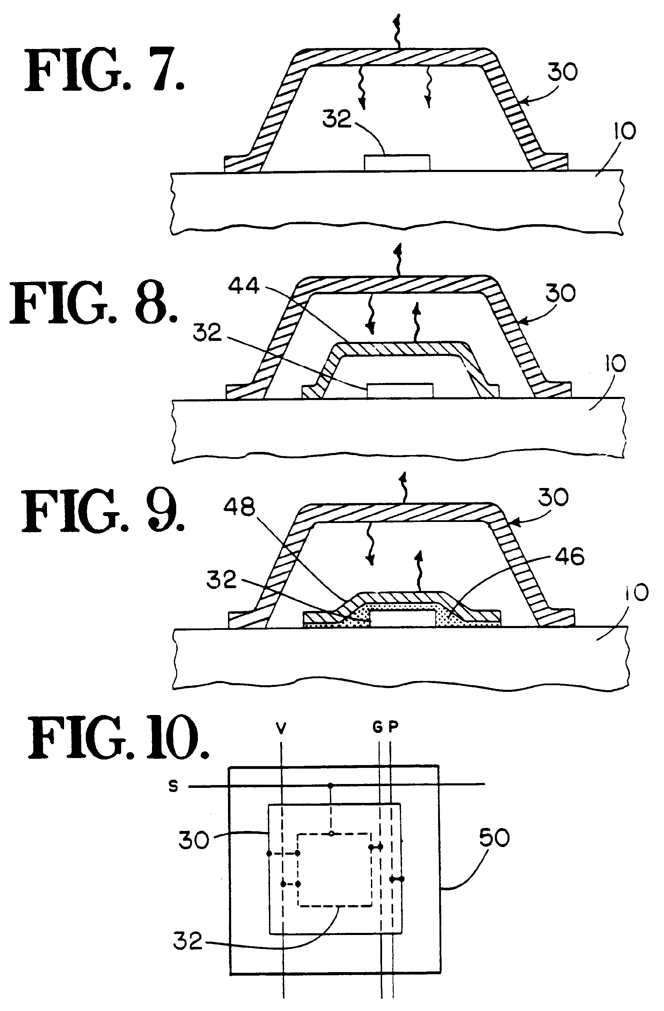

To preserve space on the substrate and free up more area for the resistor bridges, the drive circuits 32 are preferably located under the bridges, as illustrated in FIG. 7. To maintain the drive circuitry at reasonable operating temperatures, it may be shielded from the heat of the resistor by means of a second bridge 44 as illustrated in FIG. 8. This second bridge is spaced from both the resistor bridge 30 and the drive circuit 32, and is formed from a thermally reflective material such as aluminum. In addition to protecting the circuit elements from overheating, the reflective bridge 44 increases the pixel output power, since most of the IR radiation which it reflects is transmitted through the thin resistor bridge to enhance the output IR radiation.

FIG. 9 illustrates an alternate to the discrete reflective bridge 44. In this embodiment an electrically insulative layer 46 such as SiO₂ is laid down over the drive circuit 32, followed by a thermally reflective layer 48 such as aluminum over the insulative layer.

Additional area on the array may be conserved and devoted to the radiating resistor elements by directing at least some of the lead lines under the bridge resistors. Such an arrangement is illustrated in FIG. 10. In this single layer metallization scheme, the image data, power and ground lines for each pixel 50 are run under the resistor bridge 30, while the strobe line extends along the side of the resistor. With a double layer metallization, all four lines could be separated by insulating layers and run under the bridge. Single and double layer metallization techniques are well known in the art. For further savings in real estate, adjacent pixels could share the same power and ground lines.

The preferred technique for fabricating the array is to first fabricate the drive circuits on an SOS wafer. The whole substrate is then covered with a spacer layer, such as potassium chloride or aluminum, which can be selectively etched. A resist layer is then laid on top of the spacer layer to define the pixels. The resist at the intended resistor bridge locations is next exposed, the unexposed resist is washed off, and the spacer layer below the removed resist is etched away. After removing the remaining resist the bridge material is overcoated on the remaining spacer layer by a technique such as sputtering or electron beam evaporation, depending upon the bridge material and properties desired. A shadow mask technique might also be employed to form the bridges, but it is difficult to obtain desirably high pixel density and small bridge dimension with this technique. Finally, the remaining spacer material is removed by standard techniques, such as dissolving away potassium chloride or etching away aluminum.

With the described IR simulation system, 60-65% of the pixel area can be devoted to the resistor. As a result, the resistors do not need to be heated to as high a temperature to attain a given effective pixel temperature as with the prior system that employed much smaller resistors. The resistors can be tailored to impedance match the drive circuits, thereby significantly improving the efficiency of the device. The problems of capacitive and electrical shorting associated with the lead lines is also substantially alleviated. The device is calculated to have an effective thermal dynamic range of 1,000°C in the 3-5 micron region, and 600°-700°C in the 8-12 micron region (with the substrate at room temperature). Frame rates of 200 Hz are achievable without bothersome flicker.

## Claims

1. An infrared (IR) radiating element, comprising:
a substrate (10) formed from an insulative material,
a resistor element (30) spanning a portion of said substrate (10) and contacting the substrate (10) at spaced apart contact locations, a thermally insulative gap being associated with said resistor element (30), and
a semiconductive drive circuit (32) for directing a current through said resistor element (30) to heat the resistor element (30) and thereby produce IR radiation therefrom,
characterized in that
said resistor element (30) is formed as a resistor bridge (30), said resistor bridge (30) being shaped to form said thermally insulative gap between the resistor bridge (30) and substrate between said contact locations, and said drive circuit (32) is located on said substrate (10).

2. The IR radiating element of claim 1, characterized in that said drive circuit (32) is located on the substrate surface under said resistor bridge (30).

3. The IR radiating element of claim 1, further characterized by a thermally reflective element (44; 46, 48) disposed under and spaced from the resistor bridge (30), said thermally reflective element (44; 46, 48) reflecting IR radiation received from said resistor bridge (30).

4. The IR radiating element of claim 3, characterized in that said drive circuit (32) is located on the substrate surface under said thermally reflective element (44; 46, 48).

5. The IR radiating element of claim 4, characterized in that said thermally reflective element (44; 46, 48) comprises a bridge (44) formed from a thermally reflective material bridging said drive circuit (32) and spaced from both said drive circuit (32) and said resistor bridge (30).

6. The IR radiating element of claim 4, characterized in that said thermally reflective element (44; 46, 48) comprises an insulative layer (46) overlying said drive circuit (32), and a thermally reflective layer (48) overlying said insulative layer (46).

7. The IR radiating element of claim 1, characterized in that said substrate (10) comprises sapphire.

8. The IR radiating element of claim 7, characterized in that said semiconductive drive circuit (32) is formed from silicon.

9. The IR radiating element of claim 1, characterized in that the impedance of said resistor bridge (30) substantially matches the drive circuit impedance.

10. The IR radiating element of claim 1, characterized in that said resistor bridge (30) comprises a base bridge (38) formed from an insulative material, and a generally conductive layer (40) over said base bridge (38), the resistivity and thickness of said generally conductive layer (40) being selected to produce a desired resistance for said resistor bridge (30).

11. The IR radiating element of claim 10, characterized in that said generally conductive layer (40) comprises a metal.

12. The IR radiating element of claim 10, characterized in that said generally conductive layer (40) comprises a cermet-metal material.

13. The IR radiating element of claim 10, characterized in that said generally conductive layer (40) is surmounted by a coating of high thermal emissive material.

14. The IR radiating element of claim 1, characterized in that said resistor bridge (30) is formed from a material having an enhanced porosity which decreases its thermal conductivity.

15. The IR radiating element of claim 1, characterized in that said resistor bridge (30) comprises a center span (34) and a pair of legs (36) extending upward from the substrate (10) and supporting the center span (34), and that the cross-sectional areas of said legs (36) are tapered in a decreasing fashion toward said center span (34) from cross-sectional areas at the substrate (10) which exceed that of the center span (34), thereby concentrating the voltage drop across the resistor bridge (30) and the resultant heating at the center span (34) spaced from the substrate (10).

16. An infrared (IR) simulator, comprising
a substrate (10) formed from an insulative material, and
an array (12) of pixel cells (50) on said substrate (10),
characterized in that
each pixel cell (50) is an infrared radiating element according to any of claims 1, 2, 4 - 15, each semiconductor drive circuit (32) enabling a desired amount of current flow through the respective resistor bridge (30) in response to an input control signal, control, actuating and power lead lines (24, 26, 22, 20) being provided for respectively delivering control and actuating signals to said drive circuit (32), and an electrical power signal to said resistor bridge (30).

17. The IR simulator of claim 16 and claim 2, characterized in that at least some of said lead lines (24, 26, 22, 20) extend under the resistor bridge (30) of their respective pixel cells (50).

18. The IR simulator of claim 16, when taken in conjunction with claim 2, characterized in that said drive circuit (32) comprises a sample and hold circuit having first and second transistors (T1, T2) and a capacitor (C1), said first transistor (T1) connected to apply a control signal to said capacitor (C1) and to a control input to said second transistor (T2) in response to an actuating signal, said capacitor (C1) holding the control input to said second transistor (T2) at a substantially constant level, and said second transistor (T2) being connected to apply a power signal to said resistor bridge (30) in an amount determined by the control signal at its control input.

19. The IR simulator of claim 16, when taken in conjunction with claim 1, further characterized by means (14) for cooling said substrate (10).

20. An infrared (IR) simulator, characterized by
a) a vacuum housing (4) having an IR window (6),
b) an IR pattern generator (2) within said housing (4), comprising
1) the IR simulator according to claim 16, or claim 16 when taken in conjunction with any of claims 2, 4, 7, 8 or 17, said array (12) of pixel cells (50) being arranged in a matrix of rows and columns, each semiconductor drive circuit (32) being responsive to input control and strobe signals to heat the resistor bridge (30) and thereby transmit IR radiation therefrom through said IR window (6),
2) a series of control lead lines (24) for delivering respective control signals to each column of pixel cells (50),
3) a series of strobe lead lines (26) for delivering respective strobe signals to each row of pixel cells (50),
4) a series of power lead lines (22) for delivering an electrical power signal to said pixel cells (50), and
5) cooling means (14) on the opposite side of said substrate (10) from said pixel cells (50),
c) means for applying successive sets of input control signals to said control lead lines (24),
d) means for applying strobe signals to each of said strobe lead lines (26) in succession, said strobe signals being applied in synchronism with said input control signals to direct said control signals to desired pixel cells (50), and
e) optical means (18) in the path of IR radiation transmitted from said IR pattern generator (2) through said IR window (6) for optically conditioning said radiation for detection by an IR detector.

## Patentansprüche

1. Infrarot (IR) abstrahlendes Element, mit:
einem aus einem isolierenden Material geformten Substrat (10),
einem Widerstandselement (30), das einen Bereich des Substrates (10) überspannt und das Substrat (10) an voneinander beabstandeten Kontaktstellen kontaktiert, wobei dem Widerstandselement (30) ein thermisch isolierender Zwischenraum zugeordnet ist, und
einer halbleitenden Ansteuerschaltung (32), um einen Strom durch das Widerstandselement (30) zu leiten und das Widerstandselement (30) zu erhitzen und dadurch eine davon ausgehende IR-Strahlung zu erzeugen,
dadurch gekennzeichnet, daß
das Widerstandselement (30) als eine Widerstandsbrücke (30) ausgebildet ist, wobei die Widerstandsbrücke (30) so gestaltet ist, daß sie den thermisch isolierenden Zwischenraum zwischen der Widerstandsbrücke (30) und Substrat zwischen den Kontaktstellen ausbildet, und daß die Ansteuerschaltung (32) auf dem Substrat (10) angeordnet ist.

2. Das IR abstrahlende Element nach Anspruch 1, dadurch gekennzeichnet, daß die Ansteuerschaltung (32) auf der Substratoberfläche unter der Widerstandsbrücke (30) angeordnet ist.

3. Das IR abstrahlende Element nach Anspruch 1, weiter gekennzeichnet durch ein thermisch reflektierendes Element (44; 46, 48), das unter der Widerstandsbrücke (30) und zu dieser beabstandet angeordnet ist, wobei das thermisch reflektierende Element (44; 46, 48) IR-Strahlung reflektiert, die von der Widerstandsbrücke (30) empfangen wurde.

4. Das IR abstrahlende Element nach Anspruch 3, dadurch gekennzeichnet, daß die Ansteuerschaltung (32) auf der Substratoberfläche unterhalb des thermisch reflektierenden Elementes (44; 46, 48) angeordnet ist.

5. Das IR abstrahlende Element nach Anspruch 4, dadurch gekennzeichnet, daß das thermisch reflektierende Element (44; 46, 48) eine Brücke (44) umfaßt, die aus einem thermisch reflektierenden Material gebildet ist, das die Ansteuerschaltung (32) überbrückt und sowohl von der Ansteuerschaltung (32) als auch der Widerstandsbrücke (30) beabstandet ist.

6. Das IR abstrahlende Element nach Anspruch 4, dadurch gekennzeichnet, daß das thermisch reflektierende Element (44; 46, 48) eine die Ansteuerschaltung (32) überlagernde isolierende Schicht (46) und eine die isolierende Schicht (46) überlagernde thermisch reflektierende Schicht (48) umfaßt.

7. Das IR abstrahlende Element nach Anspruch 1, dadurch gekennzeichnet, daß das Substrat (10) Saphirmaterial umfaßt.

8. Das IR abstrahlende Element nach Anspruch 7, dadurch gekennzeichnet, daß die halbleitende Ansteuerschaltung (32) aus Silicium gebildet ist.

9. Das IR abstrahlende Element nach Anspruch 1, dadurch gekennzeichnet, daß die Impedanz der Widerstandsbrücke (30) im wesentlichen an die Impedanz der Ansteuerschaltung angepaßt ist.

10. Das IR abstrahlende Element nach Anspruch 1, dadurch gekennzeichnet, daß die Widerstandsbrücke (30) eine aus einem isolierenden Material gebildete Basisbrücke (38) und eine allgemein leitende Schicht (40) über der Basisbrücke (38) umfaßt, wobei der spezifische Widerstand und die Dicke der allgemein leitenden Schicht (40) so ausgewählt wurden, daß der Widerstandsbrücke (30) ein gewünschter Widerstand verliehen wird.

11. Das IR abstrahlende Element nach Anspruch 10, dadurch gekennzeichnet, daß die allgemein leitende Schicht (40) ein Metall umfaßt.

12. Das IR abstrahlende Element nach Anspruch 10, dadurch gekennzeichnet, daß die allgemein leitende Schicht (40) ein Keramik-Metall-Material umfaßt.

13. Das IR abstrahlende Element nach Anspruch 10, dadurch gekennzeichnet, daß die allgemein leitende Schicht (40) mit einem Mantel von thermisch stark emittierendem Material bedeckt ist.

14. Das IR abstrahlende Element nach Anspruch 1, dadurch gekennzeichnet, daß die Widerstandsbrücke (30) aus einem Material gebildet ist, das eine verstärkte Porosität aufweist, was dessen thermische Leitfähigkeit verringert.

15. Das IR abstrahlende Element nach Anspruch 1, dadurch gekennzeichnet, daß die Widerstandsbrücke (30) eine mittlere freitragende Länge (34) sowie ein Paar von Schenkeln (36) umfaßt, die sich von dem Substrat (10) nach oben erstrecken und die mittlere freitragende Länge (34) unterstützen, und daß sich die Querschnittsflächen der Schenkel (36) in Richtung auf die mittlere freitragende Länge (34) hin auf eine abnehmende Weise von Querschnittsflächen an dem Substrat (10) weg verjüngen, die die der mittleren freitragenden Länge (34) übersteigen, wodurch der Spannungsabfall über der Widerstandsbrücke (30) und das sich ergebende Aufheizen an der von dem Substrat (10) beabstandeten mittleren freitragenden Länge (34) konzentriert werden.

16. Infrarot (IR)-Simulator, mit
einem aus einem isolierenden Material gebildeten Substrat (10), und
einem Array von Pixelzellen (50) auf dem Substrat (10),
dadurch gekennzeichnet, daß
jede Pixelzelle (50) ein Infrarot abstrahlendes Element nach einem der Ansprüche 1, 2, 4 - 15 ist, wobei jede Halbleiter-Ansteuerschaltung (32) es ermöglicht, daß in Antwort auf ein Eingangssteuersignal ein gewünschter Betrag an Strom durch die entsprechende Widerstandsbrücke (30) fließt, wobei Steuer-, Betätigungs- und Stromzufuhrleitungen (24, 26, 22, 20) vorgesehen sind, um jeweils Steuer- und Betätigungssignale zu der Ansteuerschaltung (32) sowie ein elektrisches Leistungssignal zu der Widerstandsbrücke (30) zu liefern.

17. Der IR-Simulator nach Anspruch 16 und Anspruch 2, dadurch gekennzeichnet, daß sich wenigstens einige der Zufuhrleitungen (24, 26, 22, 20) unter der Widerstandsbrücke (30) ihrer jeweiligen Pixelzellen (50) erstrecken.

18. Der IR-Simulator nach Anspruch 16, soweit dieser auf Anspruch 2 rückbezogen ist, dadurch gekennzeichnet, daß die Ansteuerschaltung (32) eine Abtast- und Halteschaltung mit ersten und zweiten Transistoren (T1, T2) und einem Kondensator (C1) umfaßt, wobei der erste Transistor (T1) so geschaltet ist, daß er dem Kondensator (C1) und einem Steuereingang zu dem zweiten Transistor (T2) in Abhängigkeit von einem Betätigungssignal ein Steuersignal zuführt, wobei der Kondensator (C1) den Steuereingang zu dem zweiten Transistor (T2) auf einem im wesentlichen konstanten Pegel hält, und wobei der zweite Transistor (T2) so geschaltet ist, daß er der Widerstandsbrücke (30) ein Leistungssignal in einem Maß zuführt, das durch das Steuersignal an seinem Steuereingang bestimmt wird.

19. Der IR-Simulator nach Anspruch 16, soweit er auf Anspruch 1 zurückbezogen ist, weiter gekennzeichnet durch Mittel (14) zum Kühlen des Substrates (10).

20. Infrarot (IR)-Simulator, gekennzeichnet durch
a) ein Vakuumgehäuse (4) mit einem IR-Fenster (6),
b) einen IR-Muster-Generator (2) innerhalb des Gehäuses (4), mit
1) dem IR-Simulator nach Anspruch 16, oder Anspruch 16 soweit er rückbezogen ist auf einen der Ansprüche 2, 4, 7, 8 oder 17, wobei das Array (12) von Pixelzellen (50) in einer Matrix von Reihen und Spalten angeordnet ist und jede Halbleiter-Ansteuerschaltung (32) auf Eingangssteuer- und Abtastimpulssignale anspricht, um die Widerstandsbrücke (30) aufzuheizen und dadurch von dieser IR-Strahlung durch das IR-Fenster (6) auszustrahlen,
2) einer Serie von Steuerzufuhrleitungen (24), um entsprechende Steuersignale zu jeder Spalte von Pixelzellen (50) zu liefern,
3) einer Serie von Abtastimpulszufuhrleitungen (26), um entsprechende Abtastimpulssignale zu jeder Reihe von Pixelzellen (50) zu liefern,
4) einer Serie von Stromzufuhrleitungen (22), um ein elektrisches Leistungssignal zu den Pixelzellen (50) zu liefern, und
5) Kühlmitteln (14) auf der den Pixelzellen (50) gegenüberliegenden Seite des Substrates (10),
c) Mittel, um aufeinanderfolgende Sätze von Eingangssteuersignalen an die Steuerzufuhrleitungen (24) anzulegen,
d) Mittel, um Abtastimpulssignale in Folge an jede der Abtastimpulszufuhrleitungen (26) anzulegen, wobei die Abtastimpulssignale synchron mit den Eingangssteuersignalen angelegt werden, um die Steuersignale zu gewünschten Pixelzellen (50) zu leiten, und
e) optische Mittel (18) in dem Pfad der von dem IR-Mustergenerator (2) durch das IR-Fenster (6) ausgesendeten IR-Strahlung, um die Strahlung optisch für eine Detektion durch einen IR-Detektor zu konditionieren.

## Revendications

1. Un élément rayonnant infrarouge (IR), comprenant :
un substrat (10) formé par un matériau isolant,
un élément résistif (30) enjambant une partie du substrat (10) et venant en contact avec le substrat (10) à des emplacements de contact mutuellement espacés, un espace isolant au point de vue thermique étant associé à cet élément résistif (30), et
un circuit d'attaque à semiconducteurs (32) pour faire circuler un courant à travers l'élément résistif (30) afin de chauffer l'élément résistif (30) et de produire ainsi un rayonnant IR à partir de celui-ci,
caractérisé en ce que
l'élément résistif (30) est réalisé sous la forme d'un pont résistif (30), ce pont résistif (30) ayant une forme telle qu'il définisse l'espace isolant au point de vue thermique entre le pont résistif (30) et le substrat, entre les emplacements de contact, et le circuit d'attaque (32) se trouve sur le substrat (10).

2. L'élément rayonnant IR de la revendication 1, caractérisé en ce que le circuit d'attaque (32) est placé sur la surface du substrat, sous le pont résistif (30).

3. L'élément rayonnant IR de la revendication 1, caractérisé en outre par un élément réfléchissant au point de vue thermique (44; 46, 48) disposé sous le pont résistif (30) et espacé par rapport à ce dernier, l'élément réfléchissant au point de vue thermique (44; 46, 48) réfléchissant le rayonnement IR qui est reçu à partir du pont résistif (30).

4. L'élément rayonnant IR de la revendication 3, caractérisé en ce que le circuit d'attaque (32) est placé sur le substrat, sous l'élément réfléchissant au point de vue thermique (44; 46, 48).

5. L'élément rayonnant IR de la revendication 4, caractérisé en ce que l'élément réfléchissant au point de vue thermique (44; 46, 48) comprend un pont (44) qui est formé à partir d'un matériau réfléchissant au point de vue thermique qui forme un pont sur le circuit d'attaque (32) et qui est espacé à la fois vis-à-vis du circuit d'attaque (32) et du pont résistif (30).

6. L'élément rayonnant IR de la revendication 4, caractérisé en ce que l'élément réfléchissant au point de vue thermique (44; 46, 48) comprend une couche isolante (46) recouvrant le circuit d'attaque (32), et une couche réfléchissante au point de vue thermique (48) recouvrant la couche isolante (46).

7. L'élément rayonnant IR de la revendication 1, caractérisé en ce que le substrat (10) consiste en saphir.

8. L'élément rayonnant IR de la revendication 7, caractérisé en ce que le circuit d'attaque à semiconducteurs (32) est réalisé à partir de silicium.

9. L'élément rayonnant IR de la revendication 1, caractérisé en ce que l'impédance du pont résistif (30) est pratiquement adaptée à l'impédance du circuit d'attaque.

10. L'élément rayonnant IR de la revendication 1, caractérisé en ce que le pont résistif (30) comprend un pont de base (38) formé à partir d'un matériau isolant, et une couche d'une nature générale conductrice (40), au-dessus du pont de base (38), la résistivité et l'épaisseur de la couche de nature générale conductrice (40) étant sélectionnées de façon à obtenir une résistance désirée pour le pont résistif (30).

11. L'élément rayonnant IR de la revendication 10, caractérisé en ce que la couche de nature générale conductrice (40) consiste en un métal.

12. L'élément rayonnant IR de la revendication 10, caractérisé en ce que la couche de nature générale conductrice (40) consiste en un matériau du type cermet-métal.

13. L'élémént rayonnant IR de la revendication 10, caractérisé en ce que la couche de nature générale conductrice (40) est surmontée par un revêtement d'un matériau ayant une émission thermique élevée.

14. L'élément rayonnant IR de la revendication 1, caractérisé en ce que le pont résistif (30) est formé à partir d'un matériau ayant une porosité accrue qui diminue sa conductivité thermique.

15. L'élément rayonnant IR de la revendication 1, caractérisé en ce que le pont résistif (30) comprend une portée centrale (34) et une paire de jambes (36) s'étendant vers le haut à partir du substrat (10) et supportant la portée centrale (34), et en ce que les aires de section droite des jambes (36) vont en diminuant en direction de la portée centrale (34), à partir d'aires de section droite au niveau du substrat (10) qui sont supérieures à celle de la portée centrale (34), ce qui a pour effet de concentrer la chute de tension aux bornes du pont résistif (30) et l'échauffement résultant, dans la portée centrale (34) qui est espacée du substrat (10).

16. Un simulateur infrarouge (IR), comprenant
un substrat (10) formé à partir d'un matériau isolant, et
un réseau (12) de cellules de pixels (50) sur ce substrat (10),
caractérisé en ce que
chaque cellule de pixel (50) est un élément rayonnant infrarouge selon l'une quelconque des revendications 1, 2, 4-15, chaque circuit d'attaque à semiconducteurs (32) permettant de faire circuler un courant de valeur désirée à travers le pont résistif (30) respectif, sous la dépendance d'un signal de commande d'entrée, des lignes conductrices de commande, d'actionnement et d'alimentation (24, 26, 22, 20) étant incorporées pour appliquer respectivement des signaux de commande et d'actionnement au circuit d'attaque (32), et un signal d'alimentation électrique au pont résistif (30).

17. Le simulateur IR de la revendication 16 et de la revendication 2, caractérisé en ce que certaines au moins des lignes conductrices (24, 26, 22, 20) s'étendent sous le pont résistif (30) de leurs cellules de pixels respectives (50).

18. Le simulateur IR de la revendication 16, considérée conjointement à la revendication 2, caractérisé en ce que le circuit d'attaque (32) comprend un circuit échantillonneur-bloqueur ayant des premier et second transistors (T1, T2) et un condensateur (C1), le premier transistor (T1) étant connecté de façon à appliquer un signal de commande au condensateur (C1) et à une entrée de commande du second transistor (T2) sous l'effet d'un signal d'actionnement, le condensateur (C1) maintenant l'entrée de commande du second transistor (T2) à un niveau pratiquement constant, et le second transistor (T2) étant connecté de façon à appliquer un signal d'alimentation au pont résistif (30), avec une valeur qui est déterminée par le signal de commande présent sur son entrée de commande.

19. Le simulateur IR de la revendication 16, considérée conjointement à la revendication 1, caractérisé en outre par des moyens (14) pour refroidir le substrat (10).

20. Un simulateur infrarouge (IR), caractérisé par
a) une enceinte à vide (4) ayant une fenêtre pour le rayonnement IR (6),
b) un générateur de configuration IR (2) à l'intérieur de l'enceinte (4), comprenant
1) le simulateur IR selon la revendication 16, ou la revendication 16 considérée conjointement à l'une quelconque des revendications 2, 4, 7, 8 ou 17, le réseau (12) de cellules de pixels (50) étant organisé en une matrice de lignes et de colonnes, chaque circuit d'attaque à semiconducteurs (32) réagissant à des signaux de commande et d'activation d'entrée en chauffant le pont résistif (30) et en produisant ainsi l'émission d'un rayonnement IR à partir du pont résistif, à travers la fenêtre pour le rayonnement IR (6),
2) une série de lignes conductrices de commande (24) pour appliquer des signaux de commande respectifs à chaque colonne de cellules de pixels (50),
3) une série de lignes conductrices d'activation (26) pour appliquer des signaux d'activation respectifs à chaque ligne de cellules de pixels (50),
4) une série de lignes conductrices d'alimentation (22) pour appliquer un signal d'alimentation électrique aux cellules de pixels (50), et
5) des moyens de refroidissement (4) sur la face du substrat (10) qui est opposée aux cellules de pixels (50),
c) des moyens pour appliquer des ensembles successifs de signaux de commande d'entrée aux lignes conductrices de commande (24),
d) des moyens pour appliquer des signaux d'activation à chacune des lignes conductrices d'activation (26), en succession, ces signaux d'activation étant appliqués en synchronisme avec les signaux de commande d'entrée pour diriger les signaux de commande vers des cellules de pixels désirées (50), et
e) des moyens optiques (18) dans le chemin du rayonnement IR qui est émis par le générateur de configuration IR (2) à travers la fenêtre pour le rayonnement IR (6), de façon à réaliser un conditionnement optique de ce rayonnement, pour la détection par un détecteur IR.
